# EUROPEAN PATENT SPECIFICATION

(11) **EP 2 926 551 B1**
(45) Date of publication and mention of the grant of the patent: **23.10.2019**
(21) Application number: 12889699.0
(22) Date of filing: 03.12.2012
(51) Int. Cl.: H04N 7/14, H04M 11/06, A61B 5/00, F25B 49/00, F24C 7/08, G08B 5/22

(54) **ARRANGEMENT AND METHOD FOR NUTRITION AND REMOTE CARE SERVICES**
ANORDNUNG UND VERFAHREN FÜR ERNÄHRUNGS- UND FERNPFLEGEDIENSTE
AGENCEMENT ET PROCÉDÉ POUR DES SERVICES DE NUTRITION ET DE SOINS À DISTANCE

(43) Date of publication of application: 07.10.2015
(73) Proprietor: Menumat OY, 00880 Helsinki (FI)
(72) Inventor: HAUTALA, Pekka, FI-02170 Espoo (FI); PENTTINEN, Jukka, FI-00330 Helsinki (FI)
(74) Representative: Salomäki, Juha Kari Ensio
(86) International application number: PCT/FI2012/051203
(87) International publication number: WO 2014/087041

(56) References cited:
- EP-A1- 2 362 614
- WO-A1-2005/033598
- WO-A1-2005/052453
- WO-A1-2009/125069
- WO-A1-2009/125069
- WO-A2-2008/141283
- JP-A- 2006 244 125
- US-A1- 2003 179 292
- US-A1- 2004 030 531
- US-A1- 2008 001 735
- US-A1- 2009 134 151
- US-A1- 2009 134 151
- US-A1- 2009 204 409

## Description

The object of the invention is an arrangement as defined in claim 1 and a method as defined in claim 8 for nutrition and remote care services.

Conventionally, the processing of foodstuffs, especially of foodstuffs for a home, comprises a shopping trip to a store, the storing of the foodstuffs in a refrigerator or deep-freezer, and the preparation of food e.g. on a cooker ring, in the oven or in a microwave oven. In practice a lot of time is spent on collecting foodstuffs and correspondingly the processing of foodstuffs for preparing food requires a lot of different apparatuses and utensils that take a lot of space and also form complex entities that are, among other things, difficult to maintain owing to their different natures. In addition there are many groups of people, such as elderly people, handicapped people and also children, who are unable or incompetent to themselves prepare their food portions using current methods and apparatuses.

Various food automats, which are able to prepare food by heating pre-frozen portions, have been developed to rectify the aforementioned nutrition problem. For example, the Swedish patent publication no. SE 459618 discloses a food automat, which prepares various food portions according the choice of the user. A problem with this apparatus, however, as with other corresponding prior-art apparatuses is, among others, the extremely complex construction, which makes the apparatus expensive and one that requires a lot of maintenance, although despite this susceptible to malfunction. The apparatus comprises, among other things, electric motors and transporter belts, which comprise a lot of moving parts, which are additionally in demanding conditions in the cold space and can therefore easily become unserviceable. Generally speaking, apparatuses according to prior art, in which the storage, transfer and heating of food portions is integrated into one, thus have as a problem the magnitude of the manufacturing costs of the apparatuses and consequently an expensive purchase price, and also that the technical operating reliability has, in practice, been poor owing to the complex construction.

Some groups of people, for instance elderly people and handicapped people, who need a food automat for their nutrition often have illnesses and need to see a doctor or a nurse regularly. For people of this kind it is often difficult to travel, in which case traveling to see a doctor or a nurse is troublesome and causes additional costs. In some cases a doctor or a nurse has to go to patient's home, which can be even more expensive. Especially if a distance between patient's home and a clinic is big, the costs can be very high.

Many visits to a health care clinic are routine control visits. These visits would not be needed if a doctor or a nurse could do this kind of controls remotely. This would lower the costs significantly. Controls could be handled remotely via video calls. To make video calls possible the patient need to have proper equipment and telecommunication connection. The connection can be for instance a standard telephone line, a GSM-line, a data line or a corresponding connection.

Many video call systems are known in prior art. The problem is that some groups of people may have many different apparatuses and devices at their homes, which is complicated and also expensive.

Patent publications WO2005 / 033598 A1 and WO2009 / 125069 A1 present prior art technology in the same field of technology as the present invention. However, they do not mention the use of a video call system that is intergrated into the control system of the food automat.

US2009 / 134151 A1 presents a rapid cooking oven, with broadband communication capability. The publication does not present a food automat and although the video camera is mentioned in the publication it is mentioned in a group of all kinds of possible fitments that can be connected to the home network. The publication does not tell how the video connection can be created, and is silent about the remote control of the video camera.

US2009 / 204409 A1 presents a voice interface and search for electronic devices including bluetooth headsets and remote systems. This solution makes it possible, for example, remotely control the oven at home using multiple speech synthesizers. The publication is silent about food automats and about using video call systems integrated into the control system of food automats.

The object of the present invention is to eliminate the aforementioned drawbacks and to achieve an operationally reliable, and as service-free as possible, arrangement and method for nutrition and remote care services including for example the storage, heating and serving of food portions. Daily food portions can be prepared with the apparatus according to the invention in both homes and institutions as well as in small offices where food is eaten, thereby considerably reducing the amount of work needed. Preparing daily food portions will be easier and will also become possible for people who cannot prepare their food themselves, or are unwilling or incompetent to do so. Another object of the present invention is to integrate a video call system, which can be used e.g. for remote care controls to the apparatus that stores and heats food, and to use the same connections for the video call operations as for the food handling operations. In order to achieve these objectives, the arrangement of the invention is characterized by what is disclosed in the characterization part of claim 1. Correspondingly, the method according to the invention is characterized by what is presented in the characterization part of claim 8. Other preferred embodiments of the invention are characterized by what is presented in the dependent claims.

One significant advantage of the arrangement and the method according to the invention - or more briefly and in other words, of the solution - with respect to the food automats of prior art is that the manufacturing costs will decrease, in which case the price of the apparatus will decrease and the technical operating reliability will nevertheless at the same time improve. In this case by means of the arrangement all groups of people are provided with an easy and effortless as well as a labour-saving, space-saving, and economical method for foodstuff supply in the home, in institutions and also in small offices. In this case elderly people, handicapped people and also children can easily prepare food themselves and can themselves decide what they eat in their homes and when they eat.

Another advantage of the solution according to the invention is that monitoring of the nutrition level is easy to implement, in which case users can themselves regulate the most pleasing and healthy diet for them. Nutrition intake, consumption habits, costs and other related aspects can be regularly monitored using the information collected in the database of the apparatus, and if desired reports can be printed with a printer connected to the apparatus.

In addition, the solution according to the invention comprises the possibility, depending on the application, to maintain a connection via a telecommunication network or other suitable communication network with a supplier of foodstuffs or with some other organizations or persons, such as relatives, and also to monitor the user of the apparatus via an information network. In addition, different instructions can be given and a program, e.g. as entertainment, can also be sent via the network.

Yet another advantage of the solution according to the invention is that a video call system is integrated to the apparatus that stores and heats food and the video call system uses the same communication means as the apparatus. Thus there is no need for separate apparatus and communication means, which makes the overall costs smaller, and also makes the use of the video call system easier and more simple.

In the following, the invention will be described in more detail by the aid of one preferred embodiment with reference to the attached drawings, wherein
- Fig. 1: diagrammatically presents a total solution according to the invention,
- Fig. 2: presents a partly simplified front view of the cold-storage space of the arrangement according to the invention with the door removed,
- Fig. 3: presents an oblique top view of the oven of the arrangement according to the invention,
- Fig. 4: presents an oblique top view of a storage shelf intended for a food portion of the arrangement according to the invention,
- Fig. 5: presents a top view of the storage shelf according to Fig. 4 when empty,
- Fig. 6: presents a top view of the storage shelf according to Fig. 4 with a food portion,

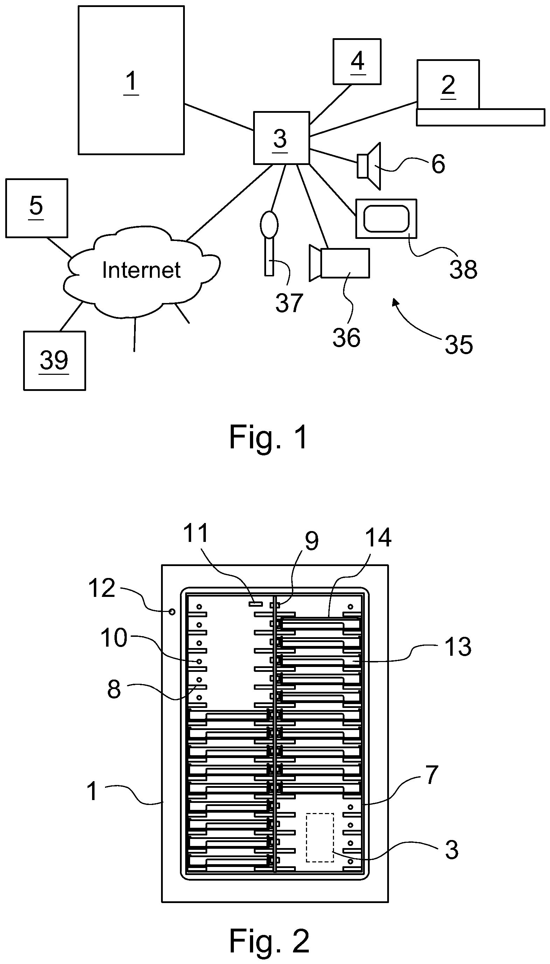

The solution of the invention according to Fig. 1 comprises at least a deep-freezer or refrigerator that functions as a cold-storage space 1, a circulating-air oven or corresponding that functions as a heating means 2, a control system 3 comprising at least a computer or microprocessor, one or more user interfaces 4, a system server 5, and also a video call system 35.

The ready, pre-frozen food portions are placed for storage into the deep-freezer that functions as a cold-storage space 1, which deep-freezer is at a suitably low temperature for deep-frozen storage. Alternatively, the ready, pre-cooled food portions are placed for storage into the refrigerator that functions as a cold-storage space 1, which refrigerator is at a suitable temperature for refrigerated storage. In one preferred embodiment of the invention all the food portions in the apparatus are stored at the same temperature, but there can also be differences in the storage temperatures. The circulating-air oven that functions as a heating means 2 is fitted to heat a food portion to an even temperature that is suitable from the viewpoint of the user either by means of resistance heating technology, microwave heating technology, or a combination of these, or by means of some other heating technology suited to the purpose.

The user interface 4 is e.g. connected to the control system 3 of the apparatus according to the arrangement, which control system comprises the programs and actuators needed by the apparatus. The control system 3, which functions as the data processing part, is connected to the cold-storage space 1 in order to e.g. track, monitor and control the functions and temperature of the cold-storage space 1. The control system 3 is further connected to the heating means 2, in order to e.g. track, monitor and control the functions and temperature of the heating means 2. The control system 3 is also connected to the video call system 35 in order to make it possible to use the same food processing apparatus for video calls with a doctor or a nurse or somebody else. The video call system 35 makes it possible to make remote diagnoses and to give nursing instructions remotely.

The same control system 3 can also be connected to more than one cold-storage space 1 and heating means 2, and when necessary, to more than one video call system 35. For example, in some big institutions, there can be one or more cold-storage spaces 1, heating means 2 and/or video call systems 35, which are connected to the one and the same control system 3.

The control system 3 is also connected to a public telecommunication network, such as e.g. telephone network and/or the Internet or some other data communications network. The control system 3 comprises at least a processor part, a data communication part, which comprises the necessary data communication functions, a control part, which comprises the necessary control functions, monitoring functions and regulation functions, and also connection means for receiving and sending information.

Telecommunications can be used for ordering new foodstuffs from the foodstuffs supplier. This function can be automatic, in which case a new order is placed when the foodstuffs decrease below the minimum set quantity. The order can also be manual, in which case the user defines the quantity and type of the foodstuffs by means of the user interface 4 of the apparatus. By means of the network interface it is also possible to transmit fault information about any defects that possibly occur in the apparatus and alerts about depletion of the food, and also to send data to be heard from the loudspeaker 6 of the apparatus, which is placed in connection with the heating means 2, e.g. on the base of the heating means 2. For tracking and monitoring the apparatus and the use of the apparatus e.g. a phone can be used, by means of text messages, or a second computer, from which also the content and quantity of food portions of an apparatus in the placement location can be viewed. This type of external computer can be e.g. a system server 5 connected to the network.

The control system 3 further offers the possibility of controlling the nutritional amounts and quality of the foodstuffs, either automatically or by guiding the user. Monitoring of the nutrition level can be easily implemented, in which case if the user needs a diet the control system 3 ensures that it is implemented.

The deep-freezer or refrigerator that functions as a cold-storage space 1 can be freely positioned, even in another space with respect to the heating means 2, because the connection between the control system 3 of the cold-storage space 1 and the heating means 2 is wireless, e.g. a Bluetooth, infrared, radio or some other corresponding wireless connection. Both the control system 3 of the cold-storage space 1 and the heating means 2 comprise appropriate connection means for the connection. The connection between the control system 3 of the cold-storage space 1 and the heating means 2 can also be wired. Additionally, there can also be two or more units of the heating means 2 and two or more cold storage units, all of which comprise a connection to the control system 3. In this case a number of food portions can be prepared simultaneously.

The identification of food portions is based on a barcode system, the advantage of which are such clear markings that the arrangement according to the invention reliably identifies the foodstuffs brought into the apparatus, which e.g. the distribution vehicle of the food shop or other service organization brings on the basis of an order directly to the user of the apparatus.

The video call system 35 comprises at least a video camera 36 and a microphone 37, which are connected to the control system 3. The video call system 35 comprises also a display device 38, which is used to show video of the video calls. The display device can be e.g. a computer monitor. Also e.g. a television can be used as a display device 38. Like the loudspeaker 6, the video camera 36, the microphone 37 and the display device 38 can be placed for example in connection with the heating means 2, e.g. on the base of the heating means 2.

The video camera 36 is arranged in a way that it can be controlled remotely. For instance, a doctor can remotely move and turn the video camera 36 and also use zoom to see better what he/she wants to see. The doctor can give instruction to the patient based on what he/she sees on the video. The doctor can also ask the patient to come to see the doctor if the video shows something that needs more precise examination or possibly some other actions.

The video call system 35 also comprises one or more buttons, for instance in the user interface 4, which buttons can be used to make a call and receive a call and also to perform other actions.

Fig. 2 presents the cold-storage space 1 of the arrangement according to the invention, as viewed from the front and with the door removed. The cold-storage space 1 is in principle a conventional deep-freezer, inside which is fitted a shelving structure 7 provided with side walls and rear walls, which shelving comprises a plurality of shelf spaces 9a provided with support means 8 and guide means 9, in which shelf spaces are stored shelves 13 that are empty or that contain food portions 14 and that function as the storage means of food portions 14. In Fig. 2 some of the shelf spaces 9a are left empty for the sake of clarity and a food portion 14 is visible on only one topmost shelf 13. At the point of each shelf space 9a on the rear wall of the shelving structure is a switch 10, which is fitted to indicate whether a food portion 14 is on the shelf 13 or not. The cold-storage space 1 also comprises a door switch 12, which is fitted to monitor the opening and closing of the door, as well as a temperature sensor 11 for monitoring the temperature of the cold storage of the cold-storage space 1. In addition, at least the main components of the control system 3 are disposed in the compressor part of the cold-storage space, where they are in a safe place and out of the way.

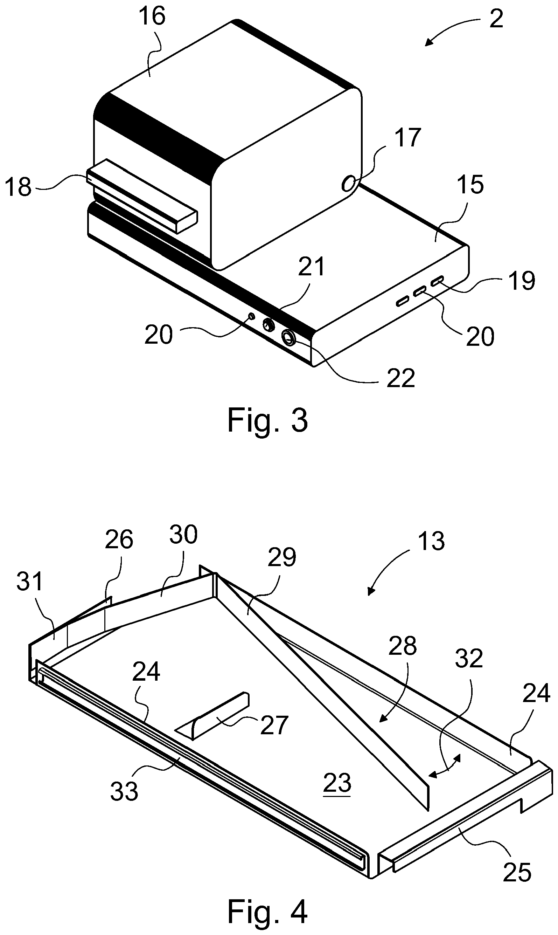

Fig. 3 presents the circulating-air oven that functions as the heating means 2 of the arrangement according to the invention. The oven comprises a frame part 15 and a hood 16 that is open at its base and hinged to the frame part with a hinge 17, which hood is fitted to turn to the open position from the front upwards by lifting it with the handle 18. The heating elements of the oven are inside the hood 16. Either one or a number of food portions can be heated with the oven at one and the same time. The frame part of the oven comprises a plurality of parallel connectors 19, which can be e.g. USB connectors or corresponding. A bar code reader 4a can be connected as one user interface to one connector 19 and e.g. also a USB memory stick 4b can be connected as a user interface to a second connector 19. Additionally, the frame part comprises a signal lamp 20, a pushbutton 21 and an iButton reader 22 that in a way also function as a user interface. The signal lamp 20, e.g. a LED light, indicates the functioning of the oven. For example, it is unlit in its normal state, flashes during heating of the oven and is continuously lit when the food is ready. The pushbutton 21, which is an Information button, can be pressed at any time whatsoever, in which case the apparatus announces in speech what it is doing or when it will be ready or what the situation is. For example, when pressing the pushbutton 21 in the heating phase the apparatus announces in speech how much heating time remains. In another phase the apparatus announces the information of the phase in question.

Correspondingly, an iButton reader is connected to escort memories, into each of which some code, e.g. the letters and numbers A1, A2, B3, etc, is programmed. Commands can be transmitted to the control system 3 with the escort memory and via the control system to the system server 5, in which case different commands are given with escort memories of different colors. For example, by means of escort memories a person can listen to his/her own voice mailbox, can choose whether to listen to radio broadcasts or not, and also can send a call request e.g. to his/her relative, in which case the system sends a call request by text message to a preselected mobile phone number, etc.

Fig. 4 presents a storage shelf 13 intended for a food portion 14 of the arrangement according to the invention. The shelf 13 is essentially the shape of a right-angled box and it contains an essentially flat base 23, sidewalls 24, a front wall 25 forming a handle, and a rear wall 26, which extends from the second side edge of the shelf 13 to approximately the midpoint of the shelf 13 in the width direction. In addition, the outer surface of one sidewall 24 comprises a guide rail 33, which can be fitted into the guide means 9 in the shelving structure 7. A mechanical, spring-like sensing means 28 is fixed to the rear wall 26 of the shelf 13, which sensing means comprises at least a fixing part 31, a presser part 30 disposed in connection with it, and a sensor part 29 disposed in connection with the presser part 30, which sensor part is at an angle of essentially 90° with respect to the presser part. The sensing means 28 together with the parts are a spring element that is a flat bar in its shape, the presser part 30 of which is disposed at the point of the open rear end of the shelf 13, where there is no rear wall 26. At the bottom of the shelf 13 there is also a limiting means 27, which is fitted to support a food portion 14 disposed on the shelf 13 and to keep the food portion in the front part of the shelf.

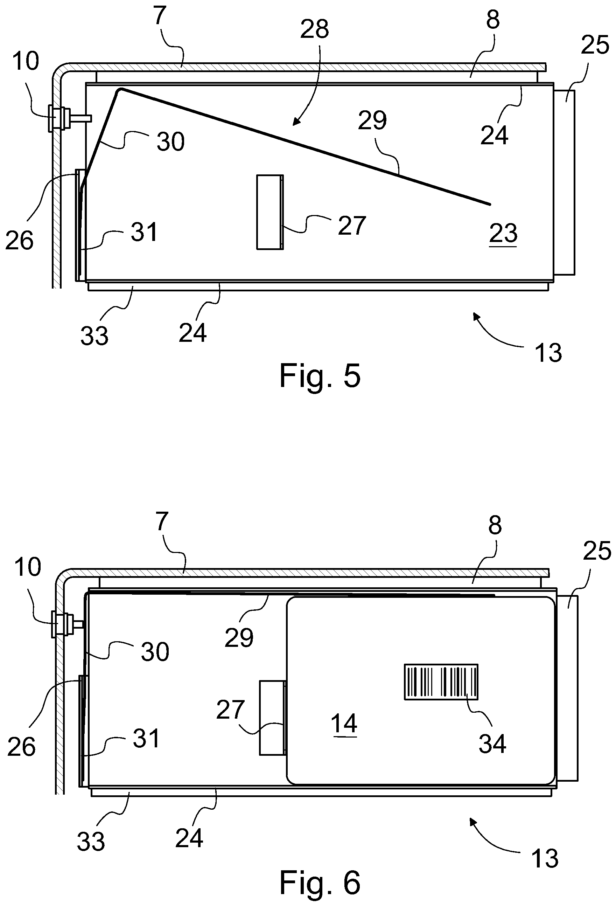

Figs. 5 and 6 present a top view of the storage shelf according to Fig. 4. In the situation according to Fig. 5 the shelf 13 is empty, in which case the spring-like sensing means 28 is free and turned under the force of the spring force to such a position that the sensor part 29 is in the at least partly empty place of the food portion, i.e. in the middle of the front part of the shelf. At the same time the presser part 30 is turned towards the inside of the shelf 13 such that when the empty shelf 13 is in its position in the shelf space 9a, the switch 10 on the rear wall of the shelving structure 7 is in the pushed-out position, in which case the control system 3 has received information that the shelf 3 that was pushed inside is empty.

Correspondingly, in the situation according to Fig. 6 the food portion 14 is placed on the front part of the shelf 13. The sensing means 28 is implemented such that when placing a food portion 14 into its position, the sensor part 29 of the sensing means 28 must be turned to the side towards the second sidewall 24, in which case it remains between the food portion 14 and the sidewall 24. At the same time the presser part 30 turns backwards so much that when pushing the shelf 13 into its position after filling the presser part 30 presses the switch 10 to the inner position, in which case the control system 3 of the guide receives information that the shelf 13 that was pushed inside contains a food portion 14. A bar code 34 is on the lid of the food portion 14 for identifying the food portion.

In the arrangement according to the invention deep-frozen food portions 14 are filled into the cold-storage space 1 of the apparatus e.g. such that at first a memory stick 4b and a barcode reader 4a are fixed into the USB connectors 19 for entering information relating to the food portions into the control system 3 of the apparatus. The memory stick 4b contains, among other things, the identification code of each food portion 14, both the written and the spoken name of the food portion, and also the heating instruction of the food portion. The barcode 34 of the food portion 14 is read with the reader 4a of the barcode before placing the food portion into the shelf space 9a of the cold-storage space 1. The food portion 14 is put on any empty shelf 13 whatsoever, which is then pushed into its position in an empty shelf space 9a of the shelving structure 7. When the shelf 13 is pushed to the bottom in the shelf space 9a, the switch 10 triggers and the guide of the apparatus detects that a food portion came into the shelf space 9a. Thus the control system 3 of the apparatus receives information about into which shelf space 9a the food portion came, and at the same time information at least about what the name and the heating instruction of the food portion 14 are.

When the user of the apparatus wants to have a meal, he/she selects the desired food portion from the menu, which is also provided with the numbers of the food portions. The front edge of the shelves 13 comprise corresponding numbers and the user starts the apparatus by opening the door of the cold-storage space 1, in which case the door switch detects that the door has opened and sends information about it to the control system 3 of the apparatus. After this the user pulls the shelf 13 that is provided with the number he/she selected out of the shelf space 9a, takes the food portion from the shelf 13, pushes the shelf 13 back into its position and closes the door of the cold-storage space 1, in which case the door switch 12 of the apparatus again reacts. Pulling out the shelf 13 simultaneously causes triggering of the switch 10, in which case the control system 3 receives information about the taking of the food portion 14 and announces the name of the food portion aloud via the loudspeakers 6.

Next the user puts the food portion 14 into the heating means 2 inside the hood 16. The control system 3 has information about the taking of the food portion from the cold-storage space 1, so the control system 3 monitors that the food portion is put into the heating means 2 within an appropriate time. The heating space of the heating means 2 comprises a temperature sensor, by means of which the apparatus measures the internal temperature of the oven of the heating means 2. If the temperature starts to decrease owing to the cold deep-frozen portion, the apparatus infers that a food portion is in the oven and starts automatically to warm the food portion in connection with the provision of the food portion according to the heating instruction it receives, simultaneously monitoring the internal temperature of the oven by means of the temperature sensor.

Also a number of food portions can be heated with the oven at the same time. The system is able to change the heating program according to need.

If a food portion 14 is not detected in the oven of the heating means 2, i.e. the temperature in the oven does not decrease sufficiently, the apparatus does not start the heating function at all. In this case the apparatus of the user detects a malfunction, in which the food portion 14 is removed from the cold space 1 of the apparatus, but it is not put into the oven of the heating means 2. This is registered as an event in the total system, from where information can be transmitted onwards to the system server 5. Also in this case the apparatus of the user, among other things, prompts with speech to put the food portion 14 into the oven and gives other instructions. This is a good safety solution e.g. for demented people.

When the food portion 14 is heated and ready, the control system 3 of the apparatus notifies this in speech, in which case the food portion 14 can be moved out of the oven of the heating means 2 by hand.

In the arrangement according to the invention different services, including telecommunication connections, e.g. via the Internet, are produced for the apparatus of the user. The services comprise e.g. various alarms when the user does something wrong. An example that can be given in this case is that the customer has not placed the food portion into the oven or has not taken a meal by a certain time. Other necessary alarms can also be given. Additionally, the providers of a service or e.g. relatives provided with user passwords and user rights can record reminders and send them via the Internet to the apparatus of the user and tell in the user interface of the browser of their own computer at what time and on what day the reminder is to be sent and also whether the reminder is of a non-recurring or recurring nature. Reminders sent as speech messages can concern catering, the taking and dosage of medicines and other necessary matters. The reminder and the instructions must be acknowledged via the pushbutton 21 of the apparatus of the user. Additionally, the apparatus of the user is provided with means, by the aid of which it also functions as a media means, such as e.g. a radio, to which a program can be sent via the Internet. Likewise, e.g. bingo-playing and corresponding entertainment games can be sent via the apparatus.

It is essential to the arrangement according to the invention that the food portion 14 and its heating instruction are paired with each other such that the apparatus knows which food portion 14 is on which shelf 13 and which heating instruction is connected to which food portion 14. This is important because the heating instructions of different food portions differ considerably from each other, in which case only with correctly performed heating is it possible to receive good-quality home-cooked food as the end result.

It is obvious to the person skilled in the art that the invention is not limited to the embodiment example presented above, but that it may vary within the scope of the claims to be presented below. Thus, for example, the arrangement is described above as a separate apparatus, but the arrangement can also be implemented as an integrated structure, in which the cold-storage space, the heating means, the user interface, the video call system and the control system form a single domestic appliance entity.

It is also obvious to the person skilled in the art that the control system can be placed somewhere else than in connection with the cold-storage space, it can be placed for example in connection with the heating means.

It is also obvious to the person skilled in the art that the spring-like sensing means on the shelf that is presented can be structurally different to what is described above. It can be a rod, or corresponding, provided with a spring, which pushes a food portion towards the rear end of the shelf when the food portion is placed onto the shelf. In this case a detent on the rear end of the rod triggers the switch on the rear wall of the shelving structure in the same way as the presser part of the spring-like sensing means when placing a shelf back into its position. When there is no food on the shelf the spring pushes the rod forwards, as far as the point where the detent of the rod triggers the switch when placing an empty shelf back into its position. The sensing means can thus be any structure whatsoever that detects a food portion on the shelf and that also identifies into which shelf space the shelf is being placed.

It is also obvious to the person skilled in the art that the name, heating instruction and other possible identification information of a food portion can be given to the control system of the apparatus of the user in another manner than by means of a memory stick connected to the USB connector in connection with the input of a food portion. All the identification information together with the names and heating instructions can be e.g. pre-entered in the memory of the control system beforehand. In this case only updating of the information in the memory when new food portions, which have not previously been used in the arrangement, come into use is sufficient. Correspondingly, all the identification information together with the names and heating instructions of food portions can also be pre-entered in advance in the server of the service provider, from where they are downloaded in connection with the input of a food portion, e.g. via the Internet or other suitable data transfer network or communication network, to the apparatus of the user.

It is further obvious to the person skilled in the art that the identification of a food portion can be performed in different way than in connection with taking from the shelf. A food portion can be identified e.g. in connection with placement in the oven using RFID technology or using some other corresponding identification technology. In this case the heating instruction corresponding to the latest food portion is given to the control system.

It is further obvious to the person skilled in the art that the alarms, reminders and instructions in the arrangement can be sent also by text messages and by e-mail.

Furthermore, it is obvious to the person skilled in the art that instead of a barcode system the identification of food portions can be based on another solution, such as on a magnetic stripe or corresponding, by means of which the markings about food portions brought to the cold-storage space are made adequately clear.

It is further obvious to the person skilled in the art that the video call system can also be different from the embodiment example presented above. For example, the video camera and the microphone can be located somewhere else than in connection with the heating means, in which case there can be a separate loudspeaker for video calls.

It is also obvious to the person skilled in the art that the microphone and the loudspeaker used for video calls can be integrated to the video camera.

## Claims

1. Arrangement for nutrition and remote care services, which arrangement comprises at least a cold-storage space (1) of food portions (14) together with a storage means (13) of the food portions (14); and a heating means (2); means (4a, 4b, 10, 28) for identifying the name, heating instruction and a placement location of a food portion (14) disposed in the cold-storage space (1) in connection with placing the food por-portions (14) in the cold-storage space (1); and means for pairing the food portions (14) and their heating instruction with each other so that the apparatus knows which food portion (14) is on which shelf (13) and which heating instruction is connected to which food portion (14); and a control system (3) provided with a user interface (4) which control system (3) is connected to a public telecommunication network, **characterized in that** the arrangement comprises a video call system (35) for handling video calls, which video call system (35) can be controlled remotely, and which video call system (35) comprises a video camera (36) and a microphone (37), which are connected to the same control system (3) with the cold-storage space (1) and heating means (2), and which video call system (35) has means to communicate with external persons (39) through the control system (3) and a public telecommunication network.

2. Arrangement according to claim 1, **characterized in that** the video call system (35) is connected to a display device (38) .

3. Arrangement according to claim 1 or 2, **characterized in that** the storage means (13) of the food portions (14) comprises essentially mechanical sensing means (28) for identifying the presence of a food portion (14) in the storage means (13), and **in that** the cold-storage space (1) comprises switches (10) in connection with the control system (3) that are situated for each shelf space (9a) to be received by the storage means (13), which switches are fitted to detect on the basis of the position of the sensing means (28) whether a storage means (13) placed into the cold-storage space (1) contains a food portion (14) or not, and that the rear part of the sensing means (28) comprises a presser element (30), which is fitted to trigger the switch (10) disposed in connection with the shelf space (9a) when a food portion (14) is in the storage means (13).

4. Arrangement according to claim 1, 2 or 3, **characterized in that** the cold-storage space (1) and the heating means (2) are separate units, which comprise contact means, by the aid of which the cold-storage space (1) and the heating means (2) are fitted to communicate between themselves either wirelessly or via wireline.

5. Arrangement according to any of the preceding claims, **characterized in that** one or more cold-storage spaces (1), one or more heating means (2) and, when necessary one or more video call systems (35) are attached to the control system (3).

6. Arrangement according to any of the preceding claims, **characterized in that** the heating means (2) is provided with a loudspeaker (6), and **in that** the arrangement comprises means for informing about the preparation of the heating of a food portion (14) and about other matters for notification or reminding by speech via the loudspeaker (6), and that the arrangement comprises means for recording reminders and instructions in speech message format and for sending the aforementioned reminders and instructions, as well as e.g. radio programs and entertainment programs, such as games, via the Internet or corresponding telecommunication network to the apparatus of the user.

7. Arrangement according to any of the preceding claims, **characterized in that** the arrangement comprises an iButton reader (22) and escort memories, into each of which some code is programmed, with which commands are transmitted to the control system (3) and via the control system (3) to the system server (5), for listening to e.g. a voice mailbox or radio broadcasts or for sending a call request, in which case the system is fitted e.g. to send a call request by text message to a pre-defined phone number.

8. Method for nutrition and remote care services, for processing food portions in an apparatus having at least a control system (3) and a user interface (4), in which method the food portions (14) are disposed in the cold-storage space (1) for storage and heated with the heating means (2) for eating, and in which method a placement location of the food portions (14) in the cold-storage space (1) is identified mechanically by means of switches (10) and sensor means (28), and in which method a heating instruction, identified at the latest before the food is heated and name of each food portion (14) are identified by means of the user interface (4) and are sent to the control system (3) of the apparatus, and the food portion (14) and its heating instruction are paired with each other so that the apparatus knows which food portion (14) is on which placement location and which heating instruction is connected to which food portion (14), **characterized in that in addition** to only handling of food portions in the apparatus, video calls are handled in the same apparatus with means comprising a video camera (36), a microphone (37), a loudspeaker (6) and a display device (38) and communicated further through the control system (3) via the same telecommunication connections as other service information concerning the food portions (14), and that the video camera (36) can be controlled remotely from a remote location.

9. Method according to claim 8, **characterized in that** different services are produced for the apparatus of the user via, among other things, telecommunication connections, e.g. the Internet, which services comprise e.g. alarms given in speech or with sound signals or light signals when the user does something wrong, and also reminders to be sent as speech messages, which can concern catering, the taking and dosage of medicines and other necessary matters, which reminders are acknowledged by means of a pushbutton (21).

10. Method according to any of claims 8-9 above, **characterized in that** a radio program and entertainment games intended to be played by the user are sent to the apparatus of the user via telecommunication connections.

11. Method according to any of claims 8-10 above, **characterized in that** an information button reader (22) and escort memories are used to transmit commands to the control system (3) and via the control system (3) to the system server (5), for listening to e.g. a voice mailbox or radio broadcasts or for sending a call request, in which case the system is fitted e.g. to send a call request by text message to a pre-defined phone number.

## Patentansprüche

1. Anordnung für Ernährungs- und Fernwartungsdienste, wobei die Anordnung mindestens einen Kühlraum (1) für Lebensmittelportionen (14) zusammen mit einer Lagereinrichtung (13) für Lebensmittelportionen (14) und ein Heizmittel (2) aufweist; ferner Mittel (4a, 4b, 10, 28) zum Identifizieren des Namens, der Heizungsanweisung und eines Platzierungsortes einer im Kühlraum (1) angeordneten Lebensmittelportion (14) in Verbindung mit dem Einsetzen der Lebensmittelportionen (14) in den Kühlraum (1); und Mittel zum Koppeln der Lebensmittelportionen (14) und ihrer Heizanweisung miteinander, so dass die Vorrichtung weiß, welche Lebensmittelportion (14) sich auf welchem Regal (13) befindet und welche Heizanweisung mit welcher Lebensmittelportion (14) gekoppelt ist; und ein Steuersystem (3), das mit einer Benutzerschnittstelle (4) versehen ist, wobei das Steuersystem (3) mit einem öffentlichen Telekommunikationsnetz verbunden ist, **dadurch gekennzeichnet, dass** die Anordnung ein Videoanrufsystem (35) zum Abarbeiten von Videoanrufen umfasst, das Videoanrufsystem (35) ferngesteuert werden kann, und wobei das Videoanrufsystem (35) eine Videokamera (36) und ein Mikrofon (37) umfasst, die über dasselbe Steuersystem (3) mit dem Kühlraum (1) und den Heizmitteln (2) verbunden sind, und wobei das Videoanrufsystem (35) Mittel zur Kommunikation mit externen Personen (39) über das Steuersystem (3) und ein öffentliches Telekommunikationsnetz aufweist.

2. Anordnung nach Anspruch 1, **dadurch gekennzeichnet, dass** das Videoanrufsystem (35) mit einer Anzeigevorrichtung (38) verbunden ist.

3. Anordnung nach Anspruch 1 oder 2, **dadurch gekennzeichnet, dass** die Lagereinrichtung (13) der Lebensmittelportionen (14) im Wesentlichen mechanische Abtastmittel (28) zum Identifizieren des Vorhandenseins einer Lebensmittelportion (14) in der Lagereinrichtung (13) umfassen, und dass der Kühlraum (1) Schalter (10) in Verbindung mit dem Steuersystem (3) umfasst, die für jeden von der Lagereinrichtung (13) aufzunehmenden Regalraum (9a) vorgesehen sind, wobei die Schalter so angebracht sind, dass sie auf der Grundlage der Position der Abtastmittel (28) erkennen, ob eine in den Kühlraum (1) eingesetzte Lagereinrichtung (13) eine Lebensmittelportion (14) aufweist oder nicht, und dass der hintere Teil der Abtastmittel (28) ein Drückerelement (30) umfasst, das so angebracht ist, dass es den in Verbindung mit dem Regalraum (9a) angeordneten Schalter (10) auslöst, wenn sich eine Lebensmittelportion (14) in der Lagereinrichtung (13) befindet.

4. Anordnung nach Anspruch 1, 2 oder 3, **dadurch gekennzeichnet, dass** der Kühlraum (1) und die Heizmittel (2) getrennte Einheiten sind, die Kontaktmittel umfassen, mit deren Hilfe der Kühlraum (1) und die Heizmittel (2) so ausgestattet sind, dass sie entweder drahtlos oder über eine Leitung miteinander kommunizieren.

5. Anordnung nach einem der vorhergehenden Ansprüche, **dadurch gekennzeichnet, dass** ein oder mehrere Kühlräume (1), ein oder mehrere Heizmittel (2) und gegebenenfalls ein oder mehrere Videoanrufsysteme (35) an dem Steuersystem (3) angeschlossen sind.

6. Anordnung nach einem der vorhergehenden Ansprüche, **dadurch gekennzeichnet, dass** die Heizmittel (2) mit einem Lautsprecher (6) versehen sind, und dass die Anordnung Mittel zum Informieren über die Vorbereitung der Erwärmung einer Lebensmittelportion (14) und über andere Angelegenheiten zur Benachrichtigung umfasst oder erinnern, durch Sprache über den Lautsprecher (6), und dass die Anordnungsanweisungen Mittel zum Aufzeichnen von Erinnerungen im Sprachnachrichtenformat und zum Senden der vorgenannten Erinnerungen und Anweisungen sowie z. B. Radioprogramme und Unterhaltungsprogramme, wie Spiele, über das Internet oder ein entsprechendes Telekommunikationsnetz an die Vorrichtung des Benutzers umfassen.

7. Anordnung nach einem der vorhergehenden Ansprüche, **dadurch gekennzeichnet, dass** die Anordnung einen iButton-Leser (22) und Begleitspeicher umfasst, in die jeweils ein Code programmiert ist, mit dem Befehle an das Steuerungssystem (3) und über das Steuerungssystem (3) an den Systemserver (5) übertragen werden, um z.B. eine Sprachmailbox oder Radiosendungen anzuhören oder zum Senden einer Rufanforderung, wobei das System in diesem Fall eingerichtet ist, z. B. eine Rufanforderung per Textnachricht an eine vordefinierte Telefonnummer zu senden.

8. Verfahren für Ernährungs- und Fernwartungsdienste, zur Verarbeitung von Lebensmittelportionen in einer Vorrichtung mit mindestens einem Steuersystem (3) und einer Benutzeroberfläche (4), bei dem die Lebensmittelportionen (14) im Kühlraum (1) zur Lagerung angeordnet und mit den Heizmitteln (2) zum Verzehr erwärmt werden, und bei dem Verfahren eine Platzierungsstelle der Lebensmittelportionen (14) im Kühlraum (1) mechanisch mittels Schaltern (10) und Sensormitteln (28) identifiziert wird, und bei dem Verfahren eine Heizanweisung, spätestens vor dem Erwärmen des Lebensmittels identifiziert wird und der Name jeder Lebensmittelportion (14) mittels der Benutzeroberfläche (4) identifiziert und an das Steuersystem (3) der Vorrichtung gesendet wird, und die Lebensmittelportion (14) und seine Erwärmungsanweisung miteinander gekoppelt sind, so dass die Vorrichtung weiß, welche Lebensmittelportion (14) sich an welcher Stelle und mit welcher Erwärmungsanweisung befindet.

9. Verfahren nach Anspruch 8, **dadurch gekennzeichnet, dass** für die Vorrichtung des Benutzers unter anderem über Telekommunikations-verbindungen, z.B. das Internet, verschiedene Dienste abgerufen werden, die z.B. Alarme in Sprache oder mit Tonsignalen oder Lichtsignalen bei Fehlverhalten des Benutzers sowie als Sprachnachrichten zu sendende Erinnerungen umfassen, die sich auf die Verpflegung, die Einnahme und Dosierung von Medikamenten und andere notwendige Angelegenheiten beziehen können, die mittels einer Drucktaste (21) bestätigt werden.

10. Verfahren nach einem der vorhergehenden Ansprüche 8-9, **dadurch gekennzeichnet, dass** ein Radioprogramm und Unterhaltungsspiele, die vom Benutzer gespielt werden wollen, über Telekommunikationsverbindungen an die Vorrichtung des Benutzers gesendet werden.

11. Verfahren nach einem der vorhergehenden Ansprüche 8-10, **dadurch gekennzeichnet, dass** ein Informationstastenleser (22) und Begleitspeicher verwendet werden, um Befehle an das Steuersystem (3) und über das Steuersystem (3) an den Systemserver (5) zu übertragen, um z.B. eine Sprachmailbox oder Radiosendungen anzuhören oder eine Anrufanforderung zu senden, wobei das System in diesem Fall beispielsweise eingerichtet ist, um eine Anrufanforderung per SMS an eine vordefinierte Telefonnummer zu senden.

## Revendications

1. Agencement pour des services de nutrition et de soins à distance, lequel agencement comprend au moins un espace de stockage frigorifique (1) de portions alimentaires (14) conjointement avec des moyens de stockage (13) des portions alimentaires (14); et des moyens de chauffage (2); des moyens (4a, 4b, 10, 28) pour identifier le nom, l'instruction de chauffage et la localisation de placement d'une portion alimentaire (14) disposée dans l'espace de stockage frigorifique (1) en liaison avec la mise en place des portions alimentaires (14) dans l'espace de stockage frigorifique (1) ; et des moyens pour jumeler les portions alimentaires (14) et leurs instructions de chauffage l'une avec l'autre de sorte que l'appareil sache quelle portion alimentaire (14) se trouve sur quelle étagère (13) et quelle instruction de chauffage est liée à quelle portion alimentaire (14); et un système de commande (3) pourvu d'une interface utilisateur (4), lequel système de commande (3) est connecté à un réseau de télécommunication public, **caractérisé en ce que** l'agencement comprend un système d'appel vidéo (35) pour traiter des appels vidéo, lequel système d'appel vidéo (35) peut être commandé à distance et lequel système d'appel vidéo (35) comprend une caméra vidéo (36) et un microphone (37), qui sont connectés au même système de commande (3) avec l'espace de stockage frigorifique (1) et les moyens de chauffage (2) et lequel système d'appel vidéo (35) présente des moyens pour communiquer avec des personnes externes (39) via le système de commande (3) et un réseau de télécommunication public.

2. Agencement selon la revendication 1, **caractérisé en ce que** le système d'appel vidéo (35) est connecté à un dispositif d'affichage (38).

3. Agencement selon la revendication 1 ou 2, **caractérisé en ce que** les moyens de stockage (13) des portions alimentaires (14) comprennent des moyens de détection sensiblement mécaniques (28) pour identifier la présence d'une portion alimentaire (14) dans les moyens de stockage (13) et **en ce que** l'espace de stockage frigorifique (1) comprend des commutateurs (10) en connexion avec le système de commande (3) qui sont situés pour chaque espace d'étagère (9a) à recevoir par les moyens de stockage (13), lesquels commutateurs sont ajustés pour détecter sur la base de la position des moyens de détection (28) si des moyens de stockage (13) placés dans l'espace de stockage frigorifique (1) contiennent ou non une portion alimentaire (14) et **en ce que** la portion arrière des moyens de détection (28) comprend un élément presseur (30) qui est ajusté pour déclencher le commutateur (10) disposé en connexion avec l'espace d'étagère (9a) lorsqu'une portion alimentaire (14) se trouve dans les moyens de stockage (13).

4. Agencement selon la revendication 1, 2 ou 3, **caractérisé en ce que** l'espace de stockage frigorifique (1) et les moyens de chauffage (2) sont des unités séparées, qui comprennent des moyens de contact à l'aide desquels l'espace de stockage frigorifique (1) et les moyens de chauffage (2) sont ajustés pour communiquer entre eux sans fil ou via une ligne filaire.

5. Agencement selon l'une quelconque des revendications précédentes, **caractérisé en ce qu'**un ou plusieurs espaces de stockage frigorifique (1), un ou plusieurs moyens de chauffage (2) et, lorsque cela s'avère nécessaire, un ou plusieurs systèmes d'appel vidéo (35) sont fixés au système de commande (3).

6. Agencement selon l'une quelconque des revendications précédentes, **caractérisé en ce que** les moyens de chauffage (2) sont pourvus d'un haut-parleur (6) et **en ce que** l'agencement comprend des moyens pour informer sur la préparation du chauffage d'une portion alimentaire (14) et sur d'autres matières à notifier ou à rappeler par échange vocal avec le haut-parleur (6), et **en ce que** l'agencement comprend des moyens pour enregistrer des rappels et des instructions en format de message vocal et pour envoyer les rappels et les instructions précités ainsi que, par exemple, des programmes radio et des programmes de spectacle, tels que des jeux, via l'Internet ou un réseau de télécommunication correspondant à l'appareil de l'utilisateur.

7. Agencement selon l'une quelconque des revendications précédentes, **caractérisé en ce que** l'agencement comprend un lecteur à bouton i (22) et des mémoires de soutien, dans chacune desquelles un certain code est programmé, avec lequel des commandes sont transmises au système de commande (3) et via le système de commande (3) au serveur (5) du système pour écouter, par exemple, une boîte vocale ou des diffusions radio ou pour envoyer une demande d'appel, auquel cas le système est ajusté, par exemple, pour envoyer une demande d'appel par un message texte à un numéro de téléphone prédéfini.

8. Procédé pour des services de nutrition et de soins à distance pour traiter des portions alimentaires dans un appareil ayant au moins un système de commande (3) et une interface utilisateur (4), dans lequel procédé les portions alimentaires (14) sont disposées dans l'espace de stockage frigorifique (1) pour un stockage et chauffées avec les moyens de chauffage (2) pour un chauffage et dans lequel procédé une localisation de placement des portions alimentaires (14) dans l'espace de stockage frigorifique (1) est identifiée mécaniquement au moyen de commutateurs (10) et de moyens capteurs (28), et dans lequel procédé une instruction de chauffage identifiée au plus tard avant que la nourriture ne soit chauffée et que le nom de chaque portion alimentaire (14) ne soit identifié au moyen de l'interface utilisateur (4) et ne soit envoyé au système de commande (3) de l'appareil, et la portion alimentaire (14) et son instruction de chauffage sont jumelées l'une à l'autre de sorte que l'appareil sache quelle portion alimentaire (14) se trouve dans quelle localisation de placement et quelle instruction de chauffage est connectée à quelle portion alimentaire (14), **caractérisé en ce que**, en plus de traiter seulement les portions alimentaires de l'appareil, des appels vidéo sont traités dans le même appareil avec des moyens comprenant une caméra vidéo (36), un microphone (37), un haut-parleur (6) et un dispositif d'affichage (38) et communiqués en outre via le système de commande (3) par le biais des mêmes connexions de télécommunication que d'autres informations de service concernant les portions alimentaires (14) et **en ce que** la caméra vidéo (36) peut être commandée à distance depuis un emplacement éloigné.

9. Procédé selon la revendication 8, **caractérisé en ce que** différents services sont produits pour l'appareil de l'utilisateur via, entre entres choses, des connexions de télécommunication, par exemple l'Internet, lesquels services comprennent, par exemple, des alarmes données par voie vocale ou avec des signaux sonores ou des signaux lumineux lorsque l'utilisateur fait quelque chose d'erroné et également des rappels à envoyer sous la forme de messages vocaux, qui peuvent concerner la restauration, la prise et le dosage de médicaments et d'autres matières nécessaires, lesquels rappels font l'objet d'un accusé de réception au moyen d'un bouton poussoir (21).

10. Procédé selon l'une quelconque des revendications 8 à 9 ci-dessus, **caractérisé en ce qu'**un programme radio et des jeux de divertissement destinés à être joués par l'utilisateur sont envoyés à l'appareil de l'utilisateur via des connexions de télécommunication.

11. Procédé selon l'une quelconque des revendications 8 à 10 ci-dessus, **caractérisé en ce qu'**un lecteur à bouton d'information (22) et des mémoires de soutient sont utilisés pour transmettre des commandes au système de commande (3) via le système de commande (3) au serveur (5) du système pour écouter, par exemple, une boîte vocale ou des diffusions radio ou pour envoyer une demande d'appel, auquel cas le système est ajusté, par exemple, pour envoyer une demande d'appel par un message texte à un numéro de téléphone prédéfini.
